# EUROPÄISCHE PATENTSCHRIFT

(11) **EP 3 083 321 B1**
(45) Veröffentlichungstag und Bekanntmachung des Hinweises auf die Patenterteilung: **21.04.2021**
(21) Anmeldenummer: 14802368.2
(22) Anmeldetag: 14.11.2014
(51) Int. Cl.: B60L 3/04, H02P 29/02, H02P 3/18, H02P 23/00, H02P 3/22, H02P 29/024

(54) **VORRICHTUNG UND VERFAHREN ZUM BETREIBEN EINER ELEKTRISCHEN MASCHINE**
APPARATUS AND METHOD FOR OPERATING AN ELECTRIC MACHINE
APPAREIL ET PROCEDE POUR FAIRE FONCTIONNER UNE MACHINE ÉLECTRIQUE

(30) Priorität: 19.12.2013 DE 102013226560
(43) Veröffentlichungstag der Anmeldung: 26.10.2016
(73) Patentinhaber: Robert Bosch GmbH, 70442 Stuttgart (DE)
(72) Erfinder: MERKEL, Tino, 71701 Schwieberdingen (DE); KOENIG, Andreas, 73666 Baltmannsweiler (DE)
(86) Internationale Anmeldenummer: PCT/EP2014/074590
(87) Internationale Veröffentlichungsnummer: WO 2015/090755

(56) Entgegenhaltungen:
- DE-A1-102007 020 509
- DE-A1-102012 002 023
- DE-A1-102012 101 508
- US-B1- 7 279 862

## Beschreibung

Die vorliegende Erfindung betrifft eine Vorrichtung und ein Verfahren zum Betreiben einer elektrischen Maschine. Insbesondere betrifft die vorliegende Erfindung eine Vorrichtung und ein Verfahren zum Betreiben einer elektrischen Maschine für den Wechsel von einem Freilaufbetrieb zu einem Kurzschlussbetrieb.

### Stand der Technik

Elektrische Maschinen, wie beispielsweise permanent erregte Synchronmaschinen, finden in zahlreichen technischen Bereichen Einsatz. Beispielsweise werden solche permanent erregten Synchronmaschinen in Kraftfahrzeugen eingesetzt. Aus Sicherheitsgründen müssen dabei Vorkehrungen für einen Betriebszustand bei einem Fehlerfall getroffen werden. Eine Möglichkeit einen solchen Betriebszustand einzustellen ist dabei der sogenannte Freilauf. Dabei werden alle Anschlüsse der elektrischen Maschine voneinander getrennt und es erfolgt keine aktive Ansteuerung der elektrischen Maschine mit einer Spannung. Ein weiterer sicherer Betriebszustand ist der sogenannte aktive Kurzschluss. Dabei werden mittels geeigneter Schaltelemente die Anschlüsse der elektrischen Maschine kurzgeschlossen.

Die Deutsche Patentanmeldung DE 10 2012 010 508 A1 offenbart eine Vorrichtung und ein Verfahren zum Kurzschließen einer permanent erregten Synchronmaschine, wobei die Maschine durch Stromrichterventile kurzgeschlossen wird. Weicht eine Spannung in einem Zwischenkreis der Ansteuerschaltung die elektrische Maschine dabei von einem Grenzwert ab, so werden die Stromrichterventile wieder geöffnet und die Maschine anschließend im Freilauf betrieben.

DE 10 2012 101 508 A1 betrifft ein Verfahren und eine Vorrichtung zum Betreiben einer elektrischen Maschine. Überschreitet im Fehlerfall eine Spannung im Zwischenkreis einen vorbestimmten Grenzwert, so wird die Maschine kurzgeschlossen. Unterschreitet die Spannung im Zwischenkreis die vorgegebene Grenzspannung, so wird die elektrische Maschine im Freilauf betrieben.

DE 10 2007 020 509 A1 betrifft die Fehlerbehandlung einer elektrischen Maschine eines Hybridantriebs. Vor dem Kurzschließen des Versorgungsanschlusses der elektrischen Maschine wird die elektrische Maschine dabei für eine vorbestimmte Zeitspanne im Freilauf angesteuert.

DE 10 2012 002 023 A1 betrifft ein Verfahren und eine Vorrichtung zum Betreiben einer Wechselrichterschaltung einer Elektromaschine. Ist die Drehzahl der Elektromaschine oberhalb eines Grenzwertes, so wird die Elektromaschine im Kurzschlussmodus betrieben. Ist die Drehzahl unterhalb des Grenzwertes, wird die Elektromaschine im Freilaufmodus betrieben.

US 7 279 862 B1 betrifft die Fehlerbehandlung eines wechselrichtergesteuerten Elektromotors. Wenn die Geschwindigkeit des Motors größer ist als eine vorgegebene Geschwindigkeit, wird der Motor im Freilauf betrieben. Ist die Geschwindigkeit des Motors kleiner als eine vorgegebene Geschwindigkeit, wird der Motor im Kurzschlussmodus betrieben.

DE 10 2011 081 173 A1 betrifft eine Betriebszustandsschaltung und ein Verfahren zum Ansteuern eines Wechselrichters, wobei in Abhängigkeit von der ermittelten Drehzahl der Wechselrichter in einen Freilaufzustand oder einen aktiven Kurzschluss geschaltet wird.

Es besteht ein Bedarf nach einer Vorrichtung und einem Verfahren, das einen möglichst sicheren und schonenden Wechsel vom Freilauf in den Betriebszustand eines aktiven Kurzschlusses einer elektrischen Maschine ermöglicht.

### Offenbarung der Erfindung

Die vorliegende Erfindung schafft hierzu eine Vorrichtung und ein Verfahren zum Betreiben einer elektrischen Maschine mit den Merkmalen der unabhängigen Patentansprüche.

### Vorteile der Erfindung

Der vorliegenden Erfindung liegt die Idee zugrunde, den Wechsel von einem Freilauf zu einem aktiven Kurzschluss einer elektrischen Maschine auf genau definierte Rahmenbedingungen zu beschränken. Nur wenn an den Anschlüssen der elektrischen Maschine definierte Spannungsverhältnisse vorhanden sind, erfolgt dabei ein Umschalten von dem Freilauf in den aktiven Kurzschluss. Auf diese Weise können die beim Wechsel vom Freilauf in den aktiven Kurzschluss auftretenden transienten Phasenströme reduziert werden. Diese Reduzierung der Phasenströme wirkt sich positiv auf die Lebensdauer der Bauteile in der Ansteuerschaltung für die elektrische Maschine aus. Darüber hinaus können auch die dabei verwendeten Bauteile aufgrund der geringeren zu erwartenden Phasenströme schwächer und somit kostengünstiger dimensioniert werden. Ebenso wirken sich die verringerten transienten Phasenströme auch positiv auf die Dimensionierung und die Lebensdauer der elektrischen Maschine selbst aus.

Die Spannungswerte und somit die Rahmenbedingungen, zu denen von dem Freilauf in den aktiven Kurzschluss gewechselt werden soll, können dabei zuvor bestimmt werden. Somit kann der erfindungsgemäße Wechsel vom Freilauf in den aktiven Kurzschluss besonders einfach ausgeführt werden, ohne dabei unverhältnismäßig große Phasenströme hervorzurufen.

Erfindungsgemäß umfasst die Vorrichtung einen Spannungssensor, der dazu ausgelegt ist, die elektrische Spannung an den Anschlüssen in der elektrischen Maschine zu erfassen. Der Wechsel von dem Freilaufgetriebe in den Kurzschlussbetrieb erfolgt dabei dann, wenn die so erfasste elektrische Spannung an den Anschlüssen der elektrischen Maschine einen vorbestimmten Wert aufweist. Somit kann der Wechsel von dem Freilaufbetrieb in den aktiven Kurzschluss besonders einfach initiiert werden.

Erfindungsgemäß umfasst die Vorrichtung alternativ einen Drehwinkelgeber, der dazu ausgelegt ist, eine Winkelposition des Rotors der elektrischen Maschine zu erfassen, wobei die elektrische Spannung an den Anschlüssen der elektrischen Maschine basierend auf der Winkelposition des Rotors der elektrischen Maschine bestimmt wird. Durch den Drehwinkelgeber kann auf die Stellung des Rotors und somit auf die Spannungsverhältnisse an den Anschlüssen der elektrischen Maschine im Freilauf geschlossen werden. Somit ist keine direkte Bestimmung der Spannungsverhältnisse an den elektrischen Anschlüssen nötig. Dennoch kann auf diese Weise eine effiziente und schonende Umschaltung vom Freilaufbetrieb in den Kurzschlussbetrieb realisiert werden.

Erfindungsgemäß ist der Wechselrichter dazu ausgelegt, von dem Freilaufbetrieb in den Kurzschlussbetrieb dann umzuschalten, wenn der Betrag der Spannung in einem Strang der elektrischen Maschine maximal ist. Liegt an den Strängen der elektrischen Maschine jeweils eine Wechselspannung an, so kann insbesondere dann, wenn eine dieser Wechselspannungen gerade einen Maximalwert aufweist, ein besonders schonender Wechsel vom Freilaufbetrieb in den aktiven Kurzschluss erfolgen.

Gemäß einem Ausführungsbeispiel umfasst der Wechselrichter eine Mehrzahl von Halbleiterschaltern, wobei im Kurzschlussbetrieb die elektrischen Anschlüsse über die Halbleiterschalter miteinander elektrisch verbunden werden. Vorzugsweise umfassen die Halbleiterschalter ferner jeweils eine parallel geschaltete Freilaufdiode. Solche Halbleiterschalter eignen sich besonders gut für die Ansteuerung einer elektrischen Maschine und auch für das Ansteuern der elektrischen Maschine im Freilaufbetrieb, sowie in einem aktiven Kurzschluss.

Gemäß einem Ausführungsbeispiel betrifft die vorliegende Erfindung eine elektrische Antriebsvorrichtung mit einer elektrischen Maschine und einer erfindungsgemäßen Vorrichtung zum Betreiben einer elektrischen Maschine.

Gemäß einem Ausführungsbeispiel umfasst die elektrische Maschine dabei eine permanent erregte Synchronmaschine.

Gemäß einem weiteren Ausführungsbeispiel umfasst die vorliegende Erfindung ein Kraftfahrzeug mit einem elektrischen Antriebssystem, das eine erfindungsgemäße Vorrichtung zum Betreiben einer elektrischen Maschine umfasst.

Weitere Ausführungsformen und Vorteile der Erfindung ergeben sich aus der nachfolgenden Beschreibung unter Bezug auf die beigefügten Figuren.

### Kurze Beschreibung der Zeichnungen

Dabei zeigen:
- Figur 1:: eine schematische Darstellung einer Ansteuerung einer elektrischen Maschine im Freilaufbetrieb;
- Figur 2:: eine schematische Darstellung einer Ansteuerung einer elektrischen Maschine im Kurzschlussbetrieb gemäß einem ersten Ausführungsbeispiel;
- Figur 3:: eine schematische Darstellung einer Ansteuerung einer elektrischen Maschine im Kurzschlussbetrieb gemäß einem weiteren Ausführungsbeispiel;
- Figur 4:: eine schematische Darstellung einer elektrischen Antriebsvorrichtung gemäß einem Ausführungsbeispiel;
- Figur 5:: eine schematische Darstellung eines Spannungsdiagramms für die Spannungen in den Strängen einer dreiphasigen Synchronmaschine, wie es einem Ausführungsbeispiel der vorliegenden Erfindung zugrunde liegt; und
- Figur 6:: eine schematische Darstellung eines Ablaufdiagramms für ein Verfahren, wie es einem Ausführungsbeispiel zugrunde liegt.

### Beschreibung von Ausführungsbeispielen

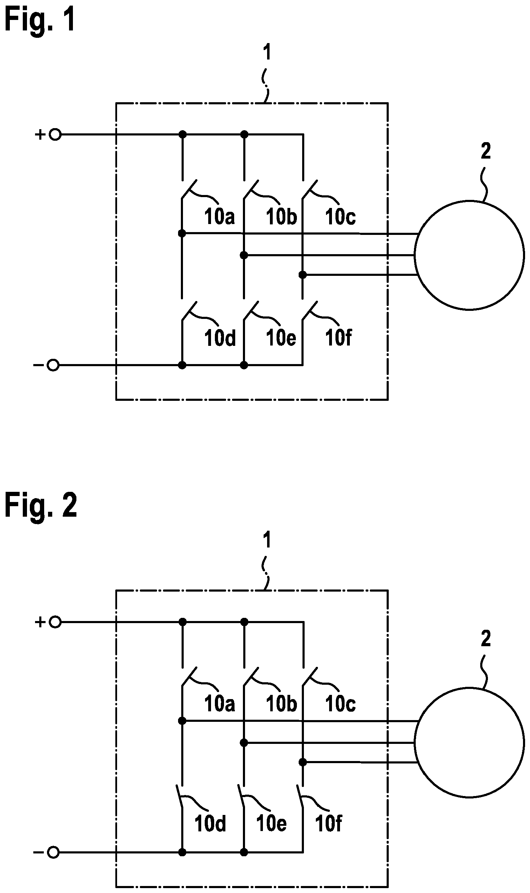

Figur 1 zeigt eine schematische Darstellung für die Ansteuerung einer elektrischen Maschine 2 im Freilauf. Bei der elektrischen Maschine 2 kann es sich beispielsweise um eine permanent erregte Synchronmaschine handeln. In diesem Ausführungsbeispiel, wie auch in den folgenden, ist dabei jeweils die dreiphasige Ansteuerung einer elektrischen Maschine dargestellt. Grundsätzlich ist jedoch auch die Ansteuerung von elektrischen Maschinen mit einer davon abweichenden Anzahl von Phasen ebenso möglich.

Die elektrische Maschine 2 wird von einem Wechselrichter 1 mit elektrischer Energie versorgt wird. Beispielsweise kann es sich bei dem Wechselrichter 1 dabei um einen Wechselrichter mit einer B6-Brücke handeln. Dieser Wechselrichter 1 wird dabei von einer Gleichspannung gespeist. Beispielsweise kann es sich bei der Gleichspannungsquelle, die diesen Wechselrichter 1 speist, um eine Batterie, wie beispielsweise die Traktionsbatterie eines Elektrofahrzeuges handeln. Aber auch andere Gleichspannungsquellen, oder auch ein AC-DC-Konverter zur Speisung des Wechselrichters 1 sind dabei möglich.

In dem in dieser Figur 1 dargestellten Ausführungsbeispiel wird die elektrische Maschine 2 dabei durch den Wechselrichter 1 im Freilauf betrieben. In diesem Freilauf sind alle Schaltelemente 10a-10f geöffnet. Zu jedem der Schaltelemente 10a-10f ist dabei vorzugsweise jeweils eine Freilaufdiode (hier nicht dargestellt) geschaltet. Über diese Freilaufdioden ist somit eventuell ein Stromfluss weiter möglich.

Figur 2 zeigt eine schematische Darstellung einer Ansteuerung einer elektrischen Maschine 2 in einem aktiven Kurzschluss. Die Beschaltung der elektrischen Maschine 2 durch den Wechselrichter 1 ist dabei analog zu der Beschaltung in Figur 1. In dem hier dargestellten aktiven Kurzschluss handelt es sich um einen sogenannten unteren aktiven Kurzschluss (uAKS), bei dem die drei unteren Schaltelemente 10d-10f geschlossen sind, während die oberen drei Schaltelemente 10a-10c geöffnet sind. Durch diesen Schaltzustand sind somit alle Anschlüsse der elektrischen Maschine 2 miteinander elektrisch verbunden und somit kurzgeschlossen. Da die oberen drei Schaltelemente 10a-10c geöffnet sind, erfolgt dabei kein eingangsseitiger Kurzschluss der Gleichspannungsquelle.

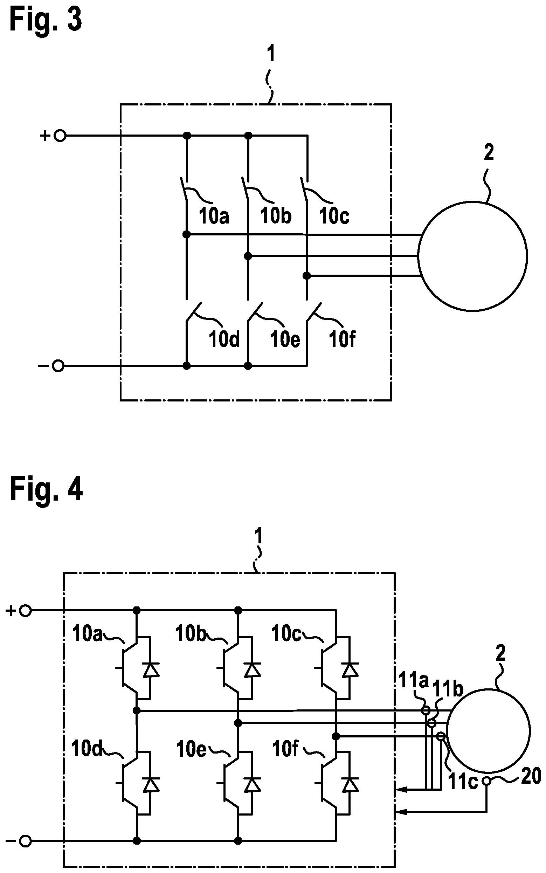

Figur 3 zeigt eine alternative Ausführungsform für einen aktiven Kurzschluss. In diesem Ausführungsbeispiel sind die oberen drei Schaltelemente 10a-10c geschlossen, während die unteren drei Schaltelemente 10d-10f geöffnet bleiben. Auch auf diese Weise sind alle Klemmen der elektrischen Maschine 2 miteinander elektrisch verbunden und somit kurzgeschlossen.

Ferner ist es auch ein aktiver Kurzschlussbetrieb möglich, in dem alle vorhandenen Schaltelemente 10a-10f geschlossen sind. In diesem Fall muss jedoch durch weitere Schaltungsmaßnahmen sichergestellt werden, dass es zu keinem Kurzschluss der an dem Eingang des Wechselrichters 1 anliegenden Gleichspannung kommt.

Beim Wechsel von dem Freilaufbetrieb gemäß Figur 1 zu dem aktiven Kurzschlussbetrieb gemäß Figur 2 oder 3 kann es dabei je nach Spannungs- bzw. Stromverhältnissen zu mehr oder weniger großen transienten Phasenströmen kommen. Hohe transiente Phasenströme wirken sich dabei jedoch nachteilig auf die Bauelemente des Wechselrichters und auf die elektrische Maschine aus.

Durch eine geeignete Wahl des Umschaltzeitpunktes für den Wechsel von dem Freilauf in den aktiven Kurzschluss können diese transienten Phasenströme jedoch reduziert werden. Aufgrund der physikalischen Zusammenhänge zwischen den Phasenströmen und den Spannungsverhältnissen an den Anschlüssen der elektrischen Maschine hat es sich als besonders günstig erwiesen, den Wechsel von dem Freilauf zu dem aktiven Kurzschluss dann auszuführen, wenn der Betrag der Spannung in einem Strang der elektrischen Maschine einen Maximalwert aufweist.

Figur 4 zeigt eine schematische Darstellung für eine elektrische Antriebsvorrichtung mit einem Wechselrichter gemäß einer Ausführungsform der vorliegenden Erfindung zur Reduzierung der transienten Phasenströme vom Wechsel vom Freilauf in den aktiven Kurschluss. Der Wechselrichter 1 wird dabei, wie bereits zuvor beschrieben, von einer Gleichspannung gespeist. Dabei werden die Spannungen an den Anschlüssen der elektrischen Maschine 2 mittels Spannungssensoren 11a-11c überwacht. Erhält der Wechselrichter 1 an einem Anforderungsanschluss A ein Signal, um von dem Freilauf in den aktiven Kurzschluss zu wechseln, so werden daraufhin die Spannungssignale von den Spannungssensoren 11a-11c ausgewertet. Die elektrische Maschine 2 wird dabei noch solange weiterhin im Freilaufbetrieb betrieben, bis eine der Spannungen an den Anschlüssen der elektrischen Maschine 2 dem Betrag nach einen Maximalwert aufweist. Zu diesem Zeitpunkt werden daraufhin in dem Wechselrichter 1 die Schaltelemente derart angesteuert, dass die Anschlüsse der elektrischen Maschine 2 elektrisch miteinander verbunden werden. Dabei können beispielsweise wie in den Figuren 2 und 3 dargestellt entweder die oberen oder die unteren drei Schaltelemente einer B6-Brücke geschlossen werden. Grundsätzlich können jedoch je nach Aufbau des Wechselrichters auch andere Schaltungskonfigurationen angesteuert werden, die dazu geeignet sind, die elektrischen Anschlüsse der elektrischen Maschine 2 kurzzuschließen.

Da zwischen den Spannungen an den Anschlüssen der elektrischen Maschine 2 und der Winkelposition des Rotors der elektrischen Maschine eine feste Beziehung besteht, ist es auch möglich, aus der aktuellen Winkelposition des Rotors der elektrischen Maschine auf die Spannungen an den Anschlüssen der elektrischen Maschine zu schließen. Somit ist es zusätzlich oder alternativ zu der Messung der Spannungen an den Anschlüssen der elektrischen Maschine 2 mittels der Spannungssensoren 11a-11c auch möglich, die Winkelposition des Rotors der elektrischen Maschine 2 mittels eines Winkelgebers 20 zu ermitteln. Basierend auf dieser Winkelposition des Winkelgebers 20 ist es daraufhin möglich, Rückschlüsse auf die Spannungen an den Anschlüssen der elektrischen Maschine 2 zu ziehen und somit ebenfalls eine Winkelposition bzw. Spannungsverhältnisse zu bestimmen, die dazu geeignet sind, einen Wechsel vom Freilauf in den aktiven Kurzschluss bei minimalen transienten Phasenströmen auszuführen.

Weitere Möglichkeiten zur Bestimmung der Spannungsverhältnisse an den Anschlüssen der elektrischen Maschine (2) sind darüber hinaus ebenso möglich. So können die Spannungsverhältnisse beispielsweise auch basierend auf einem mathematischen Modell berechnet werden. Gegebenenfalls können hierzu auch weitere Sensordaten mit in den Berechnungsprozess einfließen.

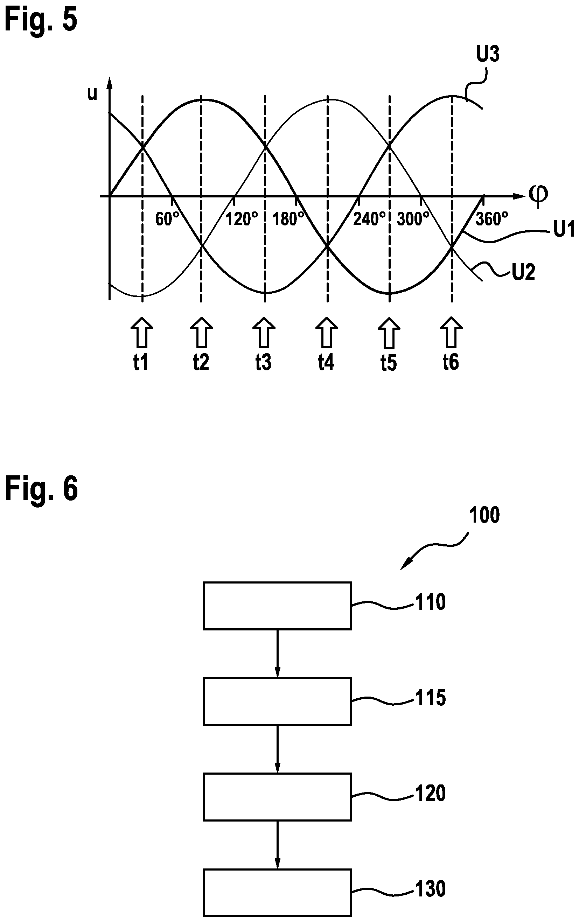

Figur 5 zeigt eine schematische Darstellung der Spannungen in den Strängen einer dreiphasigen Synchronmaschine und dazu korrespondierende günstige Umschaltzeitpunkte t1-t6 für die Realisierung der transienten Phasenströme beim Schalten vom Freilauf in den aktiven Kurzschluss. Wie in dieser Figur 5 zu erkennen ist, ergeben sich dabei bei einer dreiphasigen Synchronmaschine genau sechs Zeitpunkte t1-t6 pro Umdrehung, bei denen ein günstiger Wechsel vom Freilauf in den aktiven Kurzschluss möglich ist. Diese günstigen Umschaltzeitpunkte t1-t6 sind jeweils bei maximaler bzw. minimaler Phasenspannung der drei um jeweils 120° phasenverschobenen Spannungen an den Anschlüssen der elektrischen Maschine 2. Wie daraus zu erkennen ist, kann bei einer dreiphasigen Synchronmaschine jeweils nach 60° ein besonders günstiger Wechsel vom Freilauf in den aktiven Kurzschluss durchgeführt werden. Da diese Zeitpunkte t1-t6 bereits vorab bekannt sind, kann die Ansteuerung für den Wechsel vom Freilauf in den aktiven Kurzschluss besonders einfach und effizient realisiert werden, ohne dass hierzu eine aufwändige Schaltung bzw. Logik erforderlich wäre.

Die Anforderung für den Wechsel von dem Freilauf in den aktiven Kurzschluss kann dabei von einer beliebigen Quelle stammen. Beispielsweise kann eine solche Anforderung von einer Steuervorrichtung eines ganz oder teilweise elektrisch betriebenen Kraftfahrzeuges bereitgestellt werden. Erkennt eine solche Steuervorrichtung eine Fehlersituation in dem Kraftfahrzeug, die einen Wechsel von dem Freilauf in den aktiven Kurzschluss erforderlich macht, so kann daraufhin das entsprechende Anforderungssignal an den Wechselrichter 1 gesendet werden. Die Ansteuerung des Wechselrichters 1 verzögert daraufhin nach dem Eintreffen des Anforderungssignals den Wechsel vom Freilauf in den aktiven Kurzschluss solange, bis die zuvor beschriebenen geforderten Spannungsverhältnisse bzw. eine geeignete Rotorwinkelposition erreicht ist. Die dabei erforderlichen Verzögerungen sind jedoch in der Regel so kurz, dass sie selbst bei kritischen Fehlern zu keinen signifikanten Verzögerungen führen, die sich negativ auf die Betriebssituation des Gesamtsystems auswirken könnten.

Figur 6 zeigt eine schematische Darstellung für ein Ablaufdiagramm wie es einem Verfahren 100 zum Betreiben einer elektrischen Maschine gemäß einem weiteren Ausführungsbeispiel zugrunde liegt.

In einem Schritt 110 wird eine elektrische Maschine 2 zunächst in einem Freilaufbetrieb betrieben. Soll ein Wechsel von dem Freilaufbetrieb in den aktiven Kurzschluss erfolgen, so wird daraufhin in Schritt 120 eine elektrische Spannung an den Anschlüssen der elektrischen Maschine 2 bestimmt. Anschließend werden im Schritt 130 die Anschlüsse der elektrischen Maschine kurzgeschlossen, wenn die elektrische Spannung an den Anschlüssen der elektrischen Maschine 2 einen vorbestimmten Wert aufweist. Vorzugsweise handelt es sich bei diesem vorbestimmten Wert wie oben bereits beschrieben um den betragsmäßigen Maximalwert einer in dem Freilaufbetrieb auftretenden Spannung der elektrischen Maschine 2.

In Schritt 115 kann darüber hinaus ein weiterer Schritt vorgesehen werden, der die Anforderung zum Kurzschließen der Anschlüsse der elektrischen Maschine 2 erfasst. In diesem Fall wird in dem Schritt 130 das Kurzschließen der Anschlüsse der elektrischen Maschine 2 nach dem Erfassen der Anforderung solange verzögert, bis die Spannung an den Anschlüssen der elektrischen Maschine den vorbestimmten Wert aufweisen.

Zusammenfassend betrifft die vorliegende Erfindung einen verbesserten Wechsel vom Freilaufbetrieb in einen aktiven Kurzschluss einer elektrischen Maschine. Dabei wird der Wechsel von dem Freilauf in den aktiven elektrischen Kurzschluss solange verzögert, bis sich an den Außenklemmen einer elektrischen Maschine vorgegebene Spannungsverhältnisse einstellen bzw. der Rotor der elektrischen Maschine eine vorbestimmte und zu den geforderten Spannungsverhältnissen korrespondierende Rotorposition einnimmt.

## Patentansprüche

1. Vorrichtung zum Betreiben einer elektrischen Maschine (2),
wobei die Vorrichtung einen Wechselrichter (1) umfasst, der dazu ausgelegt ist, in einem Freilaufbetrieb die Anschlüsse der elektrischen Maschine (2) elektrisch voneinander zu trennen und in einem Kurzschlussbetrieb die Anschlüsse der elektrischen Maschine (2) miteinander elektrisch zu verbinden;
wobei die Vorrichtung weiter
einen Spannungssensor (11a, 11b, 11c) umfasst, der dazu ausgelegt ist, eine elektrische Spannung an den Anschlüssen der elektrischen Maschine (2) zu erfassen,
oder einen Drehwinkelgeber (2) umfasst, der dazu ausgelegt ist, eine Winkelposition eines Rotors der elektrischen Maschine (2) zu erfassen, wobei die elektrische Spannung an den Anschlüssen der elektrischen Maschine (2) basierend auf der Winkelposition des Rotors der elektrischen Maschine bestimmt (2) wird,
**dadurch gekennzeichnet, dass**
der Wechselrichter (1) dazu ausgelegt ist, von dem Freilaufbetrieb in den Kurzschlussbetrieb dann umzuschalten, wenn der Betrag der Spannung in einem Strang der elektrischen Maschine (2) maximal ist.

2. Vorrichtung nach Anspruch 1, wobei der Wechselrichter (1) eine Mehrzahl von Halbleiterschalter (10a - 10f) umfasst, und wobei im Kurzschlussbetrieb die elektrischen Anschlüsse über die Halbleiterschalter (10a - 10f) miteinander elektrisch verbunden werden.

3. Elektrische Antriebsvorrichtung, mit:
einer elektrischen Maschine (2); und
einer Vorrichtung nach einem der Ansprüche 1 bis 2.

4. Elektrische Antriebsvorrichtung nach Anspruch 3, wobei die elektrische Maschine (2) eine permanenterregte Synchronmaschine umfasst.

5. Kraftfahrzeug mit einer elektrischen Antriebsvorrichtung nach Anspruch 3 oder 4.

6. Verfahren (100) zum Betreiben einer elektrischen Maschine (2), mit den Schritten:
Betreiben (110) der elektrischen Maschine (2) in einem Freilaufbetrieb;
Bestimmen (120) einer elektrischen Spannung an den Anschlüssen der elektrischen Maschine (2);
**gekennzeichnet durch** den Schritt:
Kurzschließen (130) der Anschlüsse der elektrischen Maschine (2), wenn der Betrag der Spannung in einem Strang der elektrischen Maschine (2) maximal ist.

7. Verfahren (100) nach Anspruch 6, mit einem Schritt (115) zum Erfassen einer Anforderung zum Kurzschließen der Anschlüsse der elektrischen Maschine (2);
wobei der Schritt (130) zum Kurzschließen der elektrischen Maschine (2), das Kurzschließen nach dem Erfassen der Anforderung solange verzögert, bis der Betrag der Spannung in einem Strang der elektrischen Maschine (2) maximal ist.

## Claims

1. Device for operating an electrical machine (2),
wherein the device comprises an inverter (1) that is configured to electrically disconnect the terminals of the electrical machine (2) from one another in a freewheeling mode and to electrically connect the terminals of the electrical machine (2) to one another in a short-circuit mode;
wherein the device further comprises
a voltage sensor (11a, 11b, 11c) that is configured to detect an electrical voltage across the terminals of the electrical machine (2),
or comprises a rotation angle encoder (2) that is configured to detect an angular position of a rotor of the electrical machine (2), wherein the electrical voltage across the terminals of the electrical machine (2) is determined based on the angular position of the rotor of the electrical machine (2),
**characterized in that**
the inverter (1) is configured to switch over from the freewheeling mode to the short-circuit mode when the magnitude of the voltage in a string of the electrical machine (2) is at a maximum.

2. Device according to Claim 1, wherein the inverter (1) comprises a plurality of semiconductor switches (10a-10f), and wherein the electrical terminals are electrically connected to one another by way of the semiconductor switches (10a-10f) in the short-circuit mode.

3. Electrical drive device, having:
an electrical machine (2); and
a device according to either of Claims 1 and 2.

4. Electrical drive device according to Claim 3, wherein the electrical machine (2) comprises a permanently excited synchronous machine.

5. Motor vehicle having an electrical drive device according to Claim 3 or 4.

6. Method (100) for operating an electrical machine (2), having the steps:
operating (110) the electrical machine (2) in a freewheeling mode;
determining (120) an electrical voltage across the terminals of the electrical machine (2);
**characterized by** the step:
short-circuiting (130) the terminals of the electrical machine (2) when the magnitude of the voltage in a string of the electrical machine (2) is at a maximum.

7. Method (100) according to Claim 6, having a step (115) of detecting a request to short-circuit the terminals of the electrical machine (2);
wherein the step (130) of short-circuiting the electrical machine (2) delays the short-circuiting, after detecting the request, until the magnitude of the voltage in a string of the electrical machine (2) is at a maximum.

## Revendications

1. Dispositif permettant de faire fonctionner une machine électrique (2),
le dispositif comprenant un onduleur (1) qui est conçu, dans un fonctionnement en roue libre, pour isoler électriquement les bornes de la machine électrique (2) les unes par rapport aux autres, et dans un fonctionnement en court-circuit, pour relier électriquement les bornes de la machine électrique (2) les unes aux autres ;
dans lequel le dispositif
comprend en outre un capteur de tension (11a, 11b, 11c) qui est conçu pour détecter une tension électrique aux bornes de la machine électrique (2),
ou comprend un capteur d'angle de rotation (2) qui est conçu pour détecter une position d'angle d'un rotor de la machine électrique (2), la tension électrique aux bornes de la machine électrique (2) étant déterminée (2) sur la base de la position d'angle du rotor de la machine électrique,
**caractérisé en ce que**
l'onduleur (1) est conçu pour commuter du fonctionnement en roue libre au fonctionnement en court-circuit si la valeur de la tension dans une branche de la machine électrique (2) est maximale.

2. Dispositif selon la revendication 1, dans lequel l'onduleur (1) comprend une pluralité de commutateurs à semi-conducteur (10a à 10f), et dans lequel, en fonctionnement en court-circuit, les bornes électriques sont reliées électriquement les unes aux autres par les commutateurs à semi-conducteur (10a à 10f).

3. Dispositif d'entraînement électrique, comprenant :
une machine électrique (2) ; et
un dispositif selon l'une quelconque des revendications 1 et 2.

4. Dispositif d'entraînement électrique selon la revendication 3, dans lequel la machine électrique (2) comprend une machine synchrone excitée en permanence.

5. Véhicule automobile, comprenant un dispositif d'entraînement électrique selon la revendication 3 ou 4.

6. Procédé (100) permettant de faire fonctionner une machine électrique (2), comprenant les étapes consistant à :
faire fonctionner (110) la machine électrique (2) dans un fonctionnement en roue libre ;
déterminer (120) une tension électrique aux bornes de la machine électrique (2) ;
**caractérisé par** l'étape consistant à :
court-circuiter (130) les bornes de la machine électrique (2) si la valeur de la tension dans une branche de la machine électrique (2) est maximale.

7. Procédé (100) selon la revendication 6, comprenant une étape (115) consistant à détecter une demande de court-circuiter les bornes de la machine électrique (2) ;
l'étape (130) consistant à court-circuiter la machine électrique (2) retardant le court-circuitage après la détection de la demande jusqu'à ce que la valeur de la tension dans une branche de la machine électrique (2) soit maximale.
